(19) Europäisches Patentamt European Patent Office Office européen des brevets

(11) **EP 4 567 752 A1**

(12) **EUROPEAN PATENT APPLICATION**
published in accordance with Art. 153(4) EPC

(43) Date of publication:
**11.06.2025 Bulletin 2025/24**

(21) Application number: **23862046.2**

(22) Date of filing: **13.07.2023**

(51) International Patent Classification (IPC):
*G06V 20/59* (2022.01)     *G06V 10/80* (2022.01)
*G06V 40/70* (2022.01)     *G06V 10/82* (2022.01)
*G06V 40/16* (2022.01)     *G06V 40/18* (2022.01)
*G06N 3/045* (2023.01)

(52) Cooperative Patent Classification (CPC):
**G06V 20/597; G06N 3/04; G06N 3/045;
G06V 10/806; G06V 10/82; G06V 40/168;
G06V 40/18; G06V 40/193;** Y02T 10/40

(86) International application number:
**PCT/CN2023/107264**

(87) International publication number:
**WO 2024/051345 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.09.2022 CN 202211089211**

(71) Applicants:
• **ZHEJIANG ZEEKR INTELLIGENT TECHNOLOGY
CO., LTD.
Ningbo, Zhejiang 315899 (CN)**

• **Zhejiang Geely Holding Group Co., Ltd.
Hangzhou, Zhejiang 310051 (CN)**

(72) Inventor: **YU, Yiming
Ningbo, Zhejiang 315899 (CN)**

(74) Representative: **Range, Christopher William
Withers & Rogers LLP
2 London Bridge
London SE1 9RA (GB)**

(54) **DRIVER?S LINE OF SIGHT IDENTIFICATION METHOD AND APPARATUS, VEHICLE AND STORAGE MEDIUM**

(57)     A driver's line of sight identification method and apparatus, a vehicle, and a storage medium, the method including: acquiring image data of a target object; processing the image data to acquire a face image and a head image of the target object; according to the face image, acquiring an eye image of the target object, and according to the head image, acquiring the head posture of the target object; processing the eye image to acquire the relative positions of pupils and scleras; and, on the basis of the face image, the head posture and the relative positions of the pupils and the scleras, determining the line of sight direction of the target object.

FIG. 1

## Description

## CROSS-REFERENCE TO RELATED APPLICATION

This application claims priority to Chinese patent application No. 202211089211.8, titled "DRIVER'S LINE OF SIGHT IDENTIFICATION METHOD AND APPARATUS, VEHICLE, AND STORAGE MEDIUM" and filed on September 7, 2022, the entire contents of which are incorporated herein by reference.

## FIELD

The present disclosure relates to the field of vehicle technologies, and more particularly, to a method for recognizing driver's line-of-sight, an apparatus for recognizing driver's line-of-sight, a computer-readable storage medium, and a vehicle.

## BACKGROUND

A direction of driver's line-of-sight is self-evident for safety of a vehicle during driving. Every year, there are countless car accidents caused by distraction and fatigue during driving, leaving behind painful lessons. Accurately and real-time estimating the direction of driver's line-of-sight during driving to assist in safe driving is of utmost importance.

In the related art, a line-of-sight estimation algorithm only learns human line-of-sight based on human eyes as an input to a network, but ignores an influence of a head pose, leading to inaccurate line-of-sight estimation, and thus affecting driving safety and resulting in poor user experience.

## SUMMARY

The present disclosure aims to solve at least one of the technical problems in the related art to some extent. To this end, embodiments of the present disclosure provide a method for recognizing driver's line-of-sight, which combines a face image, a head pose, and a relative position of a pupil to a sclera as inputs to a network to recognize a direction of driver's line-of-sight, and can improve accuracy of recognizing the line-of-sight direction. In this way, the driver's line-of-sight can be accurately monitored in real time, improving driving safety and user experience.

Embodiments of the present disclosure also provide an apparatus for recognizing driver's line-of-sight.

Embodiments of the present disclosure also provide a computer-readable storage medium.

Embodiments of the present disclosure also provide a vehicle.

A method for recognizing driver's line-of-sight is provided according to embodiments of the present disclosure. The method includes: obtaining image data of a target object; obtaining a face image and a head image of the target object by processing the image data; obtaining an eye image of the target object based on the face image and obtaining a head pose of the target object based on the head image; obtaining a relative position of a pupil to a sclera by processing the eye image; and determining a direction of line-of-sight of the target object based on the face image, the head pose, and the relative position of the pupil to the sclera.

With the method for recognizing driver's line-of-sight according to the embodiment of the present disclosure, the face image and the head image of the target object are obtained by processing the image data, the eye image of the target object is then obtained based on the face image, and the head pose of the target object is obtained based on the head image. After that, the relative position of the pupil to the sclera is obtained by processing the eye image, and finally the direction of line-of-sight of the target object is determined based on the face image, the head pose, and the relative position of the pupil to the sclera. Therefore, the method can combine the face image, the head pose, and the relative position of the pupil to the sclera as inputs to the network to recognize the direction of driver's line-of-sight, which can improve accuracy of recognizing the direction of line-of-sight. In this way, the driver's line-of-sight can be accurately monitored in real time, improving the driving safety and the user experience.

In addition, the method for recognizing driver's line-of-sight according to the above embodiment of the present disclosure can further have the following additional technical features.

According to an embodiment of the present disclosure, the obtaining the relative position of the pupil to the sclera by processing the eye image includes: segmenting a pupil region and a sclera region in the eye image using an image segmentation network; obtaining pupil region position information and sclera region position information; and determining the relative position of the pupil to the sclera based on the pupil region position information and the sclera region position information.

According to an embodiment of the present disclosure, the obtaining the face image of the target object includes: processing the image by using a face detection model. A backbone network structure of the face detection model is a lightweight network structure, and uses a Bidirectional Feature Pyramid Network (BiFPN) structure based on a dilated convolutional neural network to fuse features of different layers.

According to an embodiment of the present disclosure, the obtaining the head image of the target object includes: expanding, based on the face image of the target object, the face image in an upward direction, a downward direction, a leftward direction, and a rightward direction on the image data by a predefined scaling factor to obtain the head image.

According to another embodiment of the present disclosure, the obtaining the head image of the target object includes: processing the image data based on one of a Region Convolutional Neural Networks (RCNN) series deep learning algorithm, a Yolo series deep learning algorithm, a Single Shot MultiBox Detector (SSD) series deep learning algorithm, and an anchor-free target detection algorithm to obtain the head image.

According to an embodiment of the present disclosure, the obtaining the eye image of the target object based on the face image includes: obtaining, based on a face keypoint detection algorithm, an eye keypoint in a region where an eye of the target object is located; obtaining a coordinate of the eye keypoint; obtaining a bounding rectangle of the eye keypoint for a left eye and a bounding rectangle of the eye keypoint for a right eye; and expanding the bounding rectangle of the eye keypoint for the left eye and the bounding rectangle of the eye keypoint for the right eye in an upward direction, a downward direction, a leftward direction, and a rightward direction by a predefined scaling factor to determine the eye image of the target object.

According to an embodiment of the present disclosure, the obtaining the bounding rectangle of the eye keypoint for the left eye and the bounding rectangle of the eye keypoint for the right eye includes: obtaining a maximum coordinate and a minimum coordinate of the eye keypoint for the left eye along an x-axis and a y-axis or a maximum coordinate and a minimum coordinate of the eye keypoint for the right eye along the x-axis and the y-axis, respectively; and determining a difference between the maximum coordinate and the minimum coordinate in the x-axis direction as a length of the bounding rectangle, and determining a difference between the maximum coordinate and the minimum coordinate in the y-axis direction as a width of the bounding rectangle.

According to an embodiment of the present disclosure, the obtaining the head pose of the target object based on the head image includes: obtaining an Euler angle of the target object based on a deep learning network; and determining the head pose when a difference between the Euler angle and a predetermined angle is smaller than a predetermined threshold.

According to an embodiment of the present disclosure, the determining the direction of the line-of-sight of the target object based on the face image, the head pose, and the relative position of the pupil to the sclera includes: performing feature extraction on each of the face image, the head pose, and the relative position of the pupil to the sclera based on a multi-branch deep learning network; and performing concatenation on a face feature of the face image, a head feature of the head pose, and the relative position of the pupil to the sclera to obtain the direction of the line-of-sight of the target object.

An apparatus for recognizing driver's line-of-sight is also provided according to one embodiment of the present disclosure. The apparatus includes: an image obtaining module configured to obtain image data of a target object; a face detection module configured to obtain a face image of the target object by processing the image data; a head detection module configured to obtain a head image of the target object by processing the image data; an eye detection module configured to obtain an eye image of the target object based on the face image; a head pose estimation module configured to obtain a head pose of the target object based on the head image; an image processing module configured to obtain a relative position of a pupil to a sclera by processing the eye image; and a line-of-sight estimation module configured to determine a direction of line-of-sight of the target object based on the face image, the head pose, and the relative position of the pupil to the sclera.

With the apparatus for recognizing driver's line-of-sight according to the embodiment of the present disclosure, the image data of the target object is obtained by the image obtaining module, the image data is processed by the face detection module to obtain the face image of the target object, the image data is processed by the head detection module to obtain the head image of the target object, the eye image of the target object is obtained based on the face image by the eye detection module, the head pose of the target object is obtained based on the head image by the head pose estimation module, the eye image is processed by the image processing module to obtain the relative position of the pupil to the sclera, and the direction of line-of-sight of the target object is determined by the line-of-sight estimation module based on the face image, the head pose, and the relative position of the pupil to the sclera. Therefore, the apparatus can combine the face image, the head pose, and the relative position of the pupil to the sclera as inputs to the network to recognize the direction of driver's line-of-sight, which can improve the accuracy of recognizing the direction of line-of-sight. In this way, the driver's line-of-sight can be accurately monitored in real time, improving the driving safety and the user experience.

A computer-readable storage medium is provided according to embodiments of the present disclosure. The computer-readable storage medium has a driver's line-of-sight recognition program stored thereon. The driver's line-of-sight recognition program implements, when being executed by a processor, the above method for recognizing the driver's line-of-sight.

With the computer-readable storage medium according to the embodiment of the present disclosure, the accuracy of recognizing the direction of the line-of-sight can be improved by executing the above method. Therefore, real-time and accurate monitoring of the driver's line-of-sight can be achieved, improving the driving safety and the user experience.

A vehicle is also provided according to embodiments of the present disclosure. The vehicle includes a memory, a processor, and a driver's line-of-sight recognition program stored on the memory and executable by the processor. The processor is configured to implement, when executing the driver's line-of-sight recognition program, the above method for recognizing the driver's line-of-sight.

With the vehicle according to the embodiment of the present disclosure, the accuracy of recognizing the direction of the line-of-sight can be improved by executing the above method for recognizing the driver's line-of-sight. Therefore, real-time and accurate monitoring of the driver's line-of-sight can be achieved, improving the driving safety and the user experience.

Additional aspects and advantages of the present disclosure will be provided at least in part in the following description, will become apparent at least in part from the following description, or can be learned from practicing of the present disclosure.

**BRIEF DESCRIPTION OF THE DRAWINGS**

FIG. 1 is a flowchart illustrating a method for recognizing driver's line-of-sight according to an embodiment of the present disclosure.

FIG. 2 is a schematic structural diagram of a face detection model according to an embodiment of the present disclosure.

FIG. 3 is a schematic diagram of a BiFPN structure according to an embodiment of the present disclosure.

FIG. 4 is a distribution diagram of a 68-keypoint model according to an embodiment of the present disclosure.

FIG. 5 is a schematic structural diagram of a multi-branch deep learning network according to an embodiment of the present disclosure.

FIG. 6 is a schematic block diagram of an apparatus for recognizing driver's line-of-sight according to an embodiment of the present disclosure.

FIG. 7 is a schematic block diagram of a vehicle according to an embodiment of the present disclosure.

**DETAILED DESCRIPTION**

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative, and are intended to explain, rather than limiting, embodiments of the present disclosure.

A method for recognizing driver's line-of-sight, an apparatus for recognizing driver's line-of-sight, a computer-readable storage medium, and a vehicle are described below with reference to the accompanying drawings.

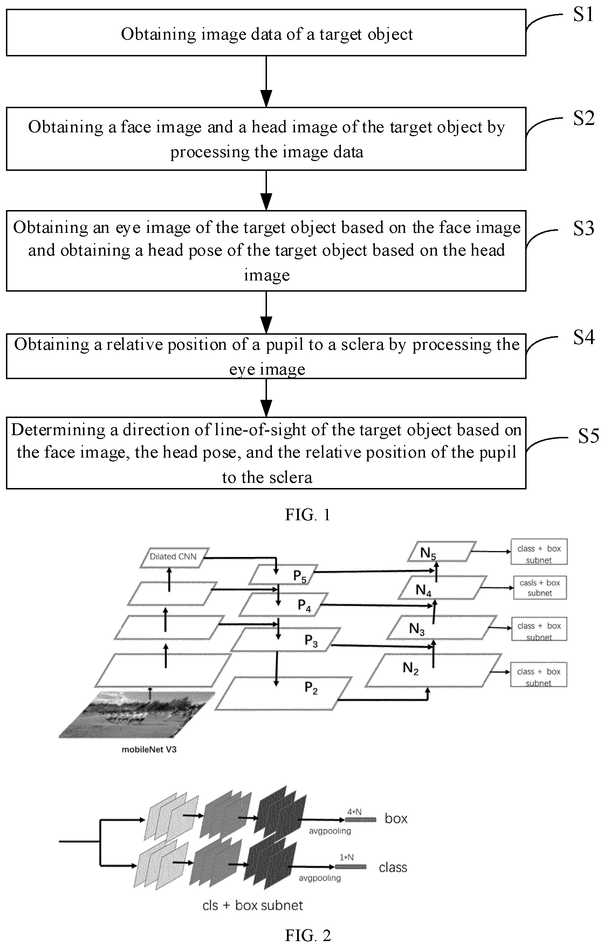

FIG. 1 is a flowchart illustrating a method for recognizing driver's line-of-sight according to an embodiment of the present disclosure.

As illustrated in FIG. 1, the method for recognizing driver's line-of-sight according to the embodiment of the present disclosure includes operations at blocks.

At block S1, image data of a target object is obtained.

In an exemplary embodiment of the present disclosure, an image of a target object (i.e., a driver) may be captured by an in-vehicle camera. The in-vehicle camera may be placed on an A-pillar, a rear-view mirror, and a steering wheel in the vehicle, and the camera may be an IR camera or an RGB camera. The in-vehicle camera captures an image of the target object in the vehicle in real time to obtain the image data of the target object.

At block S2, a face image and a head image of the target object are obtained by processing the image data.

In an exemplary embodiment of the present disclosure, the image data is used for face detection using a face detection algorithm to obtain a position of a region where a face of the target object is located, to obtain the face image of the target object. The image data is also used for head detection using an object detection algorithm to obtain a position of a region where a head of the target object is located, to obtain the head image of the target object.

At block S3, an eye image of the target object is obtained based on the face image, and a head pose of the target object is obtained based on the head image.

At block S4, a relative position of a pupil to a sclera is obtained by processing the eye image.

At block S5, a direction of line-of-sight of the target object is determined based on the face image, the head pose, and the relative position of the pupil to the sclera.

In an exemplary embodiment of the present disclosure, after capturing the image of the target object using the in-vehicle camera, face detection is performed on the image data of the target object to obtain a position coordinate of a face region in the image. The face image of the target object is obtained by extracting the face region. The face detection on the image data of the target object may be performed using algorithms such as MTCNN, RetinaFace, or YOLO series. In another exemplary embodiment of the present disclosure, publicly available face detectors in Face Detector of OpenCV or face detectors in Dlib may be used for face detection. An object detector is used to detect the head in the image data, and thus the position coordinate of the region where the head of the target object is located can be obtained. The head image of the target object can be obtained by extracting the head region. Based on the obtained face image of the target object, eye region detection is performed on the face image to determine a position of an eye in the face image. The eye image can be obtained by extracting the eye region. The eye region detection on the face image may be performed using keypoint-based detection methods, such as PFLD. In another embodiment, open-source libraries (such as Dlib) or OpenCV may be used for face keypoint detection. In addition, the eye region may be treated as a target, and object detection algorithms, such as RCNN series, YOLO series, SSD series, or CenterNet, may be used for the eye region detection. Further, the eye image is processed for segmentation to obtain the relative position of the pupil to the sclera. On the basis of obtaining the head image of the target object, the head pose of the target object is estimated based on the head image to obtain the head pose of the target object. The direction of line-of-sight of the target object is estimated based on the face image, the head pose, and the relative position of the pupil to the sclera to determine the direction of line-of-sight of the target object. Therefore, the above line-of-sight recognition method can monitor a direction of line-of-sight of a driver in real time, and achieve whether the driver's attention is on a road surface. When the driver's attention is off the road for a predetermined period, real-time voice reminders are issued to redirect the driver's attention back to the driving process, which helps ensure safe driving and significantly reduces a probability of accidents.

It should be understood that a direction of a person's line-of-sight is closely related to a position of an eyeball and a head pose of the person. When the head pose of the person is fixed, the position of the eyeball determines the direction of the person's line-of-sight. When the position of the eyeball remains unchanged and the head rotates, the direction of the person's line-of-sight also changes accordingly. With the method for recognizing driver's line-of-sight according to the embodiment of the present disclosure, the direction of line-of-sight of the target object is estimated based on the face image, the head pose, and the relative position of the pupil to the sclera to determine the direction of line-of-sight of the target object. In this way, the accuracy of recognizing the direction of line-of-sight can be improved, and thus the driver's line-of-sight can be accurately monitored in real time, improving the driving safety and the user experience.

According to an embodiment of the present disclosure, the obtaining the relative position of the pupil to the sclera by processing the eye image includes: segmenting a pupil region and a sclera region in the eye image using an image segmentation network; obtaining pupil region position information and sclera region position information; and determining the relative position of the pupil to the sclera based on the pupil region position information and the sclera region position information.

In an exemplary embodiment of the present disclosure, after obtaining the eye image, image segmentation is performed on the eye image of the target object by the image segmentation network, and the pupil region and the sclera region in the eye image are segmented to obtain the relative position of the pupil to the sclera. The image segmentation network may use one of DDRNet, Deeplab series, PSPNet, UNet series, and a Transformer-based image segmentation algorithm.

According to an embodiment of the present disclosure, the obtaining the face image of the target object includes processing the image by using a face detection model. A backbone network structure of the face detection model is a lightweight network structure, and uses a BiFPN structure based on a dilated convolutional neural network to fuse features of different layers.

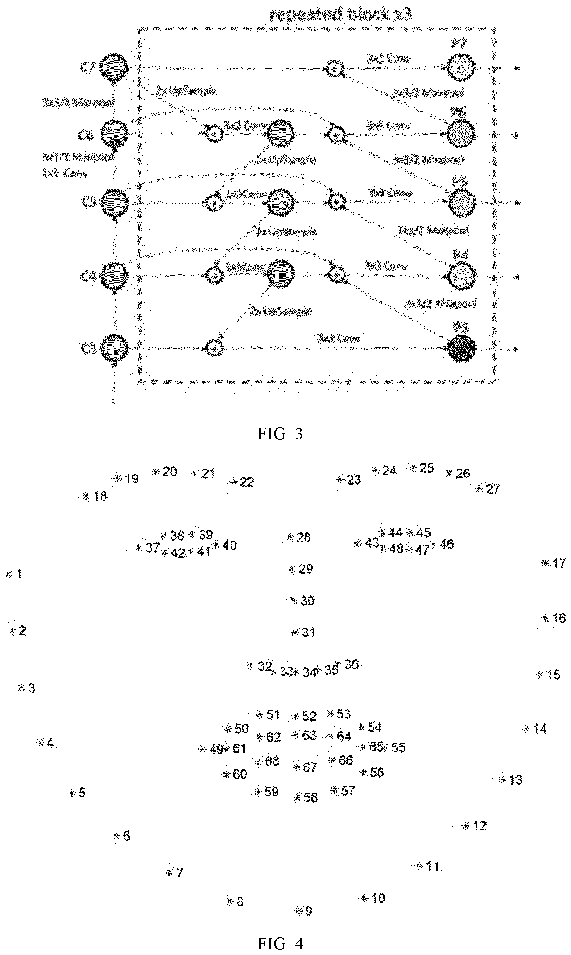

In an exemplary embodiment of the present disclosure, FIG. 2 is a schematic structural diagram of a face detection model according to an embodiment of the present disclosure. As illustrated in FIG. 2, Mobile-NetV3 is used as the backbone network for the face detector, resulting in a lightweight network structure for the backbone network structure of the face detection model. On this basis, the BiFPN structure based on the dilated convolutional neural network is used to fuse features of different layers. The image data of the target object is inputted into the face detection model for face detection, and thus a face detection box (i.e., a face region) containing the face image can be obtained. The face image of the target object is obtained by extracting the face region. The face detection model can improve a receptive field through dilated convolution, and use a depthwise separable convolution structure to reduce a computational load of the face detection model, reducing a size of the face detection model. In addition, the BiFPN structure is adopted to better fuse features across different scales. The BiFPN structure is illustrated in FIG. 3.

According to an embodiment of the present disclosure, the obtaining the head image of the target object includes expanding, based on the face image of the target object, the face image in an upward direction, a downward direction, a leftward direction, and a rightward direction on the image data by a predefined scaling factor to obtain the head image. The predefined scaling factor may be set as desired, for example, 20%. As a result, a computing power can be saved.

According to another embodiment of the present disclosure, the obtaining the head image of the target object includes processing the image data based on one of an RCNN series deep learning algorithm, a Yolo series deep learning algorithm, an SSD series deep learning algorithm, and an anchor-free target detection algorithm to obtain the head image. That is, the head image of the target object can be obtained by performing target detection on the image data of the target object with one of the above algorithms.

According to an embodiment of the present disclosure, the obtaining the eye image of the target object based on the face image includes: obtaining, based on a face keypoint detection algorithm, an eye keypoint in a region where an eye of the target object is located; obtaining a coordinate of the eye keypoint; obtaining a bounding rectangle of the eye keypoint for a left eye and a bounding rectangle of the eye keypoint for a right eye; and expanding the bounding rectangle of the eye keypoint for the left eye and the bounding rectangle of the eye keypoint for the right eye in an upward direction, a downward direction, a leftward direction, and a rightward direction by a predefined scaling factor to determine the eye image of the target object.

According to an embodiment of the present disclosure, the obtaining the bounding rectangle of the eye keypoint for the left eye and the bounding rectangle of the eye keypoint for the right eye includes: obtaining a maximum coordinate and a minimum coordinate of the eye keypoint for the left eye along an x-axis and a y-axis or a maximum coordinate and a minimum coordinate of the eye keypoint for the right eye along the x-axis and the y-axis, respectively; and determining a difference between the maximum coordinate and the minimum coordinate in the x-axis direction as a length of the bounding rectangle, and determining a difference between the maximum coordinate and the minimum coordinate in the y-axis direction as a width of the bounding rectangle.

In an exemplary embodiment of the present disclosure, the face keypoint detection algorithm is based on a 5-keypoint model, a 68-keypoint model, or a 98-keypoint model. With a higher number of keypoints, precision of the final obtained eye region becomes higher. The 68-keypoint model is taken as examples below for illustration.

FIG. 4 is a distribution diagram of a 68-keypoint model according to an embodiment of the present disclosure. As illustrated in FIG. 4, the left eye corresponds to six key points from 37 to 42, and the right eye corresponds to six key points from 43 to 48. Coordinates of the eye keypoints can be obtained based on position coordinates of the face keypoints. For the left eye, keypoint coordinates are $(x_{37}, y_{37})$, $(x_{38}, y_{38})$, $(x_{39}, y_{39})$, $(x_{41}, y_{40})$, $(x_{41}, y_{41})$, and $(x_{41}, y_{42})$. For the right eye, keypoint coordinates are $(x_{43}, y_{43})$, $(x_{44}, y_{44})$, $(x_{45}, y_{45})$, $(x_{46}, y_{46})$, $(x_{47}, y_{47})$, and $(x_{48}, y_{48})$. Based on the obtained coordinates of the eye keypoints for the left eye and the obtained coordinates of the eye keypoints for the right eye, the bounding rectangle of the eye keypoints for the left eye and the bounding rectangle of the eye keypoints for the right eye can be obtained. Taking the left eye as an example, a formula for obtaining the bounding rectangle of the eye keypoints for the left eye is as follows:

$$X_{\min} = \min(x_{37}, x_{38}, x_{39}, x_{40}, x_{41}, x_{42})$$

$$X_{\max} = \max(x_{37}, x_{38}, x_{39}, x_{40}, x_{41}, x_{42})$$

$$Y_{\min} = \min(y_{37}, y_{38}, y_{39}, y_{40}, y_{41}, y_{42})$$

$$Y_{\max} = \max(y_{37}, y_{38}, y_{39}, y_{40}, y_{41}, y_{42}) ,$$

$$W = X_{\max} - X_{\min}$$

$$H = Y_{\max} - Y_{\min}$$

where $X_{\min}$ denotes the minimum coordinate of the eye keypoint for the left eye along the x-axis, $X_{\max}$ denotes the maximum coordinate of the eye keypoint for the left eye along the x-axis, $Y_{\min}$ denotes the minimum coordinate of the eye keypoint for the left eye along the y-axis, $Y_{\max}$ denotes the maximum coordinate of the eye keypoint for the left eye along the y-axis, W denotes the length of the bounding rectangle, and H denotes the width of the bounding rectangle. Based on the coordinates of the eye keypoints for the left eye, the bounding rectangle of the eye keypoints for the left eye can be obtained through the above formula, and the bounding rectangle of the eye keypoints for the right eye can be derived through a similar method.

Since the eye keypoints closely follow the contours of the eyes, to ensure that the bounding rectangle includes an entire eye region, after obtaining the bounding rectangle of the eye keypoints for the left eye and the bounding rectangle of the eye keypoints for the right eye, the bounding rectangle of the eye keypoints for the left eye and the bounding rectangle of the eye keypoints for the right eye are expanded in the upward direction, the downward direction, the leftward direction, and the rightward direction by the predefined scaling factor. For example, the bounding rectangle of the eye keypoints for the left eye and the bounding rectangle of the eye keypoints for the right eye are expanded by 0.75*W both in the leftward direction and in the rightward direction and are expanded proportionally both in the upward direction and in the downward direction. Therefore, a complete eye image of the target object can be obtained.

According to an embodiment of the present disclosure, the obtaining the head pose of the target object based on the head image includes: obtaining an Euler angle of the target object based on a deep learning network; and determining the head pose when a difference between the Euler angle and a predetermined angle is smaller than a predetermined threshold.

In an exemplary embodiment of the present disclosure, after the head image is detected, a head pose of a to-be-detected object is learned from the head image through the deep learning network. Angles of the to-be-detected object in three directions are obtained, i.e., a Pitch angle of a head, a Yaw angle of the head, and a Roll angle of the head, that is, an Euler angle. A current pose of the head is presented through the Euler angle. A difference between the Euler angle and a preset angle of a predetermined pose is made, and the smaller the difference is, the higher the accuracy of the head image is. When the difference is smaller than the predetermined threshold, the head pose of the target object can be determined.

According to an embodiment of the present disclosure, the determining the direction of the line-of-sight of the target object based on the face image, the head pose, and the relative position of the pupil to the sclera includes: performing feature extraction on each of the face image, the head pose, and the relative position of the pupil to the sclera based on a multi-branch deep learning network; and performing concatenation on a face feature of the face image, a head feature of the head pose, and the relative position of the pupil to the sclera to obtain the direction of the line-of-sight of the target object.

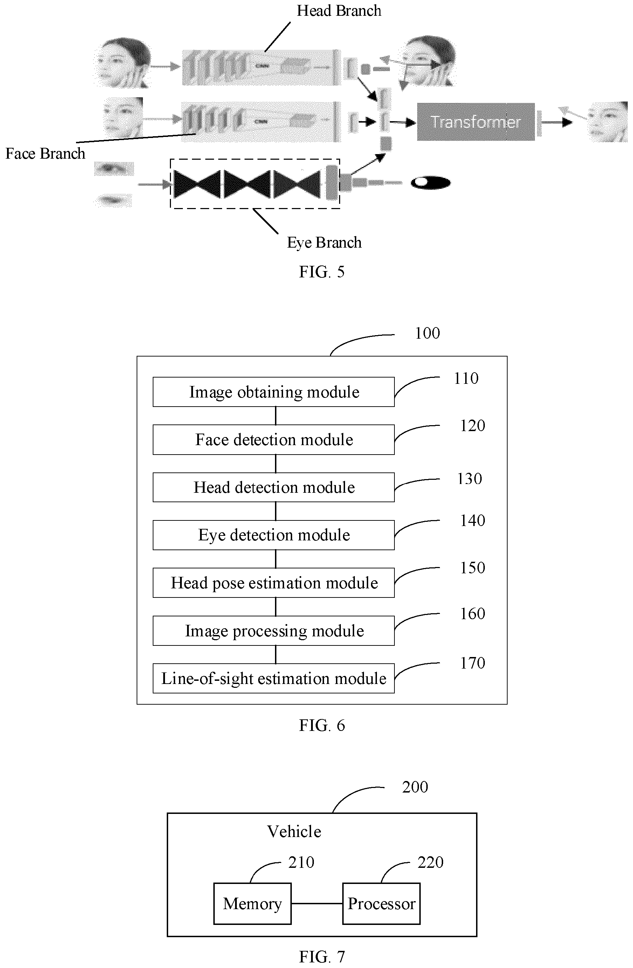

In an exemplary embodiment of the present disclosure, the direction of the line-of-sight is not only related to the head pose but also closely related to a position of the pupil. When the head pose is stored and fixed, the position of the pupil changes and the direction of the line-of-sight also changes. Therefore, it is required to combine the face image, the head pose, and the relative position of the pupil to the sclera as inputs to the multi-branch deep learning network to determine the direction of the line-of-sight of the target object. A structure of the multi-branch deep learning network is illustrated in FIG. 5.

In an exemplary embodiment of the present disclosure, as illustrated in FIG. 5, the face image, the head pose, and the eye image of the target object are inputted into the multi-branch deep learning network for feature extraction respectively. That is, a head branch is configured to estimate the head pose using a head pose estimation network, a face branch is configured to perform feature extraction on the face image using Convolutional Neural Networks (CNN), and an eye branch is configured to perform image segmentation using the image segmentation network to obtain the relative position of the pupil to the sclera. An attention mechanism is added in the feature extraction process, and a loss function is used as a constraint condition, such that the face feature of the face image, the head feature of the head pose, and the relative position of the pupil to sclera can be obtained. It should be noted that the face feature of the face image, the head feature of the head pose, and the relative position of the pupil to the sclera are represented with vectors. Finally, three vectors that respectively correspond to the face feature of the face image, the head feature of the head pose, and the relative position of the pupil to sclera are concatenated sequentially at the same level, to obtain a vector and input the vector into a transformer structure to learn interdependencies between the face feature of the face image, the head feature of the head pose, and the relative position of the pupil to sclera. An output of the transformer structure is the direction of line-of-sight of the target object. Therefore, the direction of line-of-sight of the driver can be monitored in real time, and whether the driver's attention is on the road surface can be obtained. When the driver's attention is off the road for the predetermined period, real-time voice reminders are issued to redirect the driver's attention back to the driving process, which helps ensure safe driving during the driving and significantly reduces the probability of accidents.

In summary, with the method for recognizing driver's line-of-sight according to the embodiments of the present disclosure, the face image and the head image of the target object are obtained by processing the image data, and the eye image of the target object is then obtained based on the face image. After that, the head pose of the target object is obtained based on the head image, then the relative position of the pupil to the sclera is obtained by processing the eye image, and finally the direction of line-of-sight of the target object is determined based on the face image, the head pose, and the relative position of the pupil to the sclera. Therefore, the method can combine the face image, the head pose, and the relative position of the pupil to the sclera as inputs to the network to recognize the direction of driver's line-of-sight, which can improve accuracy of recognizing the direction of line-of-sight. In this way, the driver's line-of-sight can be accurately monitored in real time, improving the driving safety and the user experience.

Corresponding to the above embodiments, an apparatus for recognizing driver's line-of-sight is further provided according to the present disclosure.

FIG. 6 is a schematic block diagram of an apparatus for recognizing driver's line-of-sight according to an embodiment of the present disclosure.

As illustrated in FIG. 6, the apparatus 100 for recognizing driver's line-of-sight according to the embodiment of the present disclosure may include an image obtaining module 110, a face detection module 120, a head detection module 130, an eye detection module 140, a head pose estimation module 150, an image processing module 160, and a line-of-sight estimation module 170.

The image obtaining module 110 is configured to obtain image data of a target object. The face detection module 120 is configured to obtain a face image of the target object by processing the image data. The head detection module 130 is configured to obtain a head image of the target object by processing the image data. The eye detection module 140 is configured to obtain an eye image of the target object based on the face image. The head pose estimation module 150 is configured to obtain a head pose of the target object based on the head image. The image processing module 160 is configured to obtain a relative position of a pupil to a sclera by processing the eye image. The line-of-sight estimation module 170 is configured to determine a direction of line-of-sight of the target object based on the face image, the head pose, and the relative position of the pupil to the sclera.

According to an embodiment of the present disclosure, the image processing module 160 is configured to obtain the relative position of the pupil to the sclera by processing the eye image. In particular, the image processing module 160 is configured to: segment a pupil region and a sclera region in the eye image using an image segmentation network; obtain pupil region position information and sclera region position information; and determine the relative position of the pupil to the sclera based on the pupil region position information and the sclera region position information.

According to an embodiment of the present disclosure, the face detection module 120 is configured to obtain the face image of the target object. In particular, the face detection module 120 is configured to process the image using a face detection model. A backbone network structure of the face detection model is a lightweight network structure, and uses a BiFPN structure based on a dilated convolutional neural network to fuse features of different layers.

According to an embodiment of the present disclosure, the head detection module 130 is configured to obtain the head image of the target object. In particular, the head detection module 130 is configured to expand the face image in an upward direction, a downward direction, a leftward direction, and a rightward direction on the image data by a predefined scaling factor based on the face image of the target object, to obtain the head image.

According to another embodiment of the present disclosure, the head detection module 130 is configured to obtain the head image of the target object. In particular, the head detection module 130 is configured to process the image data based on one of the RCNN series deep learning algorithm, the Yolo series deep learning algorithm, the SSD series deep learning algorithm, and the anchor-free target detection algorithm to obtain the head image.

According to an embodiment of the present disclosure, the eye detection module 140 is configured to obtain the eye image of the target object based on the face image. In particular, the eye detection module 140 is configured to: obtain, based on a face keypoint detection algorithm, an eye keypoint in a region where an eye of the target object is located; obtain coordinates of the eye keypoint; obtain a bounding rectangle of the eye keypoint for a left eye and a bounding rectangle of the eye keypoint for a right eye; and expand the bounding rectangle of the eye keypoint for the left eye and the bounding rectangle of the eye keypoint for the right eye in the upward direction, the downward direction, the leftward direction, and the rightward direction by the predefined scaling factor to determine the eye image of the target object.

According to an embodiment of the present disclosure, the eye detection module 140 is configured to obtain the bounding rectangle of the eye keypoint for the left eye and the bounding rectangle of the eye keypoint for the right eye. In particular, the eye detection module 140 is configured to: obtain the maximum coordinate and the minimum coordinate of the eye keypoint for the left eye along the x-axis and the y-axis and the maximum coordinate and the minimum coordinate of the eye keypoint for the right eye along the x-axis and the y-axis, respectively; and determine a difference between the maximum coordinate and the minimum coordinate in the x-axis direction as a length of the bounding rectangle, and determining a difference between the maximum coordinate and the minimum coordinate in the y-axis direction as a width of the bounding rectangle.

According to an embodiment of the present disclosure, the head pose estimation module 150 is configured to obtain the head pose of the target object based on the head image. In particular, the head pose estimation module 150 is configured to: obtain an Euler angle of the target object based on a deep learning network; and determine the head pose when a difference between the Euler angle and a predetermined angle is smaller than the predetermined threshold.

According to an embodiment of the present disclosure, the line-of-sight estimation module 170 is configured to determine the direction of the line-of-sight of the target object based on the face image, the head pose, and the relative position of the pupil to the sclera. In particular, the line-of-sight estimation module 170 is configured to: perform feature extraction on each of the face image, the head pose, and the relative position of the pupil to the sclera based on a multi-branch deep learning network; and perform concatenation on a face feature of the face image, a head feature of the head pose, and the relative position of the pupil to the sclera to obtain the direction of the line-of-sight of the target object.

It should be noted that for details not disclosed in the apparatus for recognizing driver's line-of-sight according to the embodiments of the present disclosure, reference can be made to the details disclosed in the method for recognizing driver's line-of-sight according to the above embodiments of the present disclosure, and thus details thereof will be omitted herein.

With the apparatus for recognizing driver's line-of-sight according to the embodiments of the present disclosure, the image data of the target object is obtained by the image obtaining module, the image data is processed by the face detection module to obtain the face image of the target object, the image data is processed by the head detection module to obtain the head image of the target object, the eye image of the target object is obtained based on the face image by the eye detection module, the head pose of the target object is obtained based on the head image by the head pose estimation module, the eye image is processed by the image processing module to obtain the relative position of the pupil to the sclera, and the direction of line-of-sight of the target object is determined based on the face image, the head pose, and the position of the pupil relative to the sclera by the line-of-sight estimation module. Therefore, the apparatus for recognizing driver's line-of-sight can combine the face image, the head pose, and the relative position of the pupil to the sclera as inputs to the network to recognize the direction of driver's line-of-sight, which can improve the accuracy of recognizing the direction of line-of-sight. In this way, the driver's line-of-sight can be accurately monitored in real time, improving the driving safety and the user experience.

Corresponding to the above embodiments, a computer-readable storage medium is further provided according to the present disclosure.

The computer-readable storage medium according to the embodiments of the present disclosure has a driver's line-of-sight recognition program stored thereon. The driver's line-of-sight recognition program implements, when being executed by a processor, the above method for recognizing driver's line-of-sight.

With the computer-readable storage medium according to the embodiments of the present disclosure, the accuracy of recognizing the direction of the line-of-sight can be improved by executing the above method for recognizing driver's line-of-sight. Therefore, the real-time and accurate monitoring of the driver's line-of-sight can be achieved, improving the driving safety and the user experience.

Corresponding to the above embodiments, a vehicle is further provided according to the present disclosure.

FIG. 7 is a schematic block diagram of a vehicle according to an embodiment of the present disclosure.

As illustrated in FIG. 7, a vehicle 200 according to the embodiment of the present disclosure includes a memory 210, a processor 220, and a driver's line-of-sight recognition program stored on the memory 210 and executable by the processor 220. The processor 220 is configured to implement, when executing the driver's line-of-sight recognition program, the above method for recognizing driver's line-of-sight.

With the vehicle according to the embodiments of the present disclosure, the accuracy of recognizing the direction of the line-of-sight can be improved by executing the above method for recognizing driver's line-of-sight. Therefore, the real-time and accurate monitoring of the driver's line-of-sight can be achieved, improving the driving safety and the user experience.

It should be noted that the logical and/or steps described in the flowchart or otherwise depicted herein, for example, may be considered as a fixed sequence list of executable instructions for implementing logical functions, and may be specifically implemented in any computer-readable medium for use for, or in conjunction with, an instruction execution system, apparatus, or device, such as a computer-based system, a system including a processor, or other systems that may fetch and execute instructions from the instruction execution system, apparatus, or device. For purposes of this disclosure, the "computer-readable medium" may be an apparatus that may include, store, communicate, propagate, or transport the program for use for or in conjunction with the instruction execution system, apparatus, or device. More specific examples (a non-exhaustive list) of the computer-readable medium include an electrical connection portion (an electronic device) having at least one wire, a portable computer disk cartridge (a magnetic device), a random access memory (RAM), a read-only memory (ROM), an erasable programmable read-only memory (an EPROM or Flash memory), a fiber optic device, and a portable compact disc read-only memory (CD-ROM). In addition, the computer-readable mediums may even be paper or other suitable mediums on which the program may be printed. Since the program may be obtained electronically by, for example, optical scanning of the paper or other mediums followed by editing, interpretation, or other suitable processing if necessary, and then stored in a computer memory.

It should be understood that each part of the present disclosure can be implemented in hardware, software, firmware or any combination thereof. In the above embodiments, multiple steps or methods can be implemented using software or firmware stored in a memory and executed by a suitable instruction execution system. For example, when implemented in hardware, as in another embodiment, it can be implemented by any one or combination of the following technologies known in the art: a discrete logic circuit having logic gate circuits for implementing logic functions on data signals, an application-specific integrated circuit with suitable combined logic gates, a Programmable Gate Array (PGA), a Field Programmable Gate Array (FPGA), and the like.

In the present disclosure, the description with reference to the terms "an embodiment," "some embodiments," "an example," "a specific example," "some examples," and the like means that specific features, structures, materials, or characteristics described in conjunction with the embodiment(s) or example(s) are included in at least one embodiment or example of the present disclosure. The appearances of the above phrases in various places throughout this specification are not necessarily referring to the same embodiment or example. In addition, the particular features, structures, materials, or characteristics described may be combined in any suitable manner in any one of at least one embodiment or example.

In addition, the terms such as "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, such as two and three, unless otherwise specifically defined.

In the present disclosure, unless otherwise clearly specified and limited, terms, such as "mounting," "connect," "connect to," and "fixed to,", should be understood in a broad sense. For example, it may be a fixed connection, a detachable connection, or an integral connection; mechanical connection or electrical connection; direct connection or indirect connection through an intermediate; or internal communication of two components or the interaction relationship between two components, unless otherwise clearly limited. For those skilled in the art, specific meanings of the above-mentioned terms in the present disclosure can be understood according to specific circumstances.

Although the embodiments of the present disclosure have been shown and described above, it should be understood that the above-mentioned embodiments are exemplary and should not be construed as limiting the present disclosure. Those skilled in the art can make changes, modifications, substitutions, and alternations to the above-mentioned embodiments within the scope of the present disclosure.

## Claims

1. A method for recognizing driver's line-of-sight, the method comprising:

   obtaining image data of a target object;
   obtaining a face image and a head image of the target object by processing the image data;
   obtaining an eye image of the target object based on the face image and obtaining a head pose of the target object based on the head image;
   obtaining a relative position of a pupil to a sclera by processing the eye image; and
   determining a direction of line-of-sight of the target object based on the face image, the head pose, and the relative position of the pupil to the sclera.

2. The method according to claim 1, wherein said obtaining the relative position of the pupil to the sclera by processing the eye image comprises:

   segmenting a pupil region and a sclera region in the eye image using an image segmentation network;
   obtaining pupil region position information and sclera region position information; and
   determining the relative position of the pupil to the sclera based on the pupil region position information and the sclera region position information.

3. The method according to claim 1, wherein said obtaining the face image of the target object comprises:

   processing the image by using a face detection model,
   wherein a backbone network structure of the face detection model is a lightweight network structure and uses a BiFPN structure based on a dilated convolutional neural network to fuse features of different layers.

4. The method according to claim 1, wherein said obtaining the head image of the target object comprises:

   prises:
   expanding, based on the face image of the target object, the face image in an upward direction, a downward direction, a leftward direction, and a rightward direction on the image data by a predefined scaling factor to obtain the head image.

5. The method according to claim 1, wherein said obtaining the head image of the target object comprises:

   processing the image data based on one of an RCNN series deep learning algorithm, a Yolo series deep learning algorithm, an SSD series deep learning algorithm, and an anchor-free target detection algorithm to obtain the head image.

6. The method according to claim 1, wherein said obtaining the eye image of the target object based on the face image comprises:

   obtaining, based on a face keypoint detection algorithm, an eye keypoint in a region where an eye of the target object is located;
   obtaining a coordinate of the eye keypoint;
   obtaining a bounding rectangle of the eye keypoint for a left eye and a bounding rectangle of the eye keypoint for a right eye; and
   expanding the bounding rectangle of the eye keypoint for the left eye and the bounding rectangle of the eye keypoint for the right eye in an upward direction, a downward direction, a leftward direction, and a rightward direction by a predefined scaling factor to determine the eye image of the target object.

7. The method according to claim 6, wherein said obtaining the bounding rectangle of the eye keypoint for the left eye and the bounding rectangle of the eye keypoint for the right eye comprises:

   obtaining a maximum coordinate and a minimum coordinate of the eye keypoint for the left eye along an x-axis and a y-axis and a maximum coordinate and a minimum coordinate of the eye keypoint for the right eye along the x-axis and the y-axis, respectively; and
   determining a difference between the maximum coordinate and the minimum coordinate in the x-axis direction as a length of the bounding rectangle, and determining a difference between the maximum coordinate and the minimum coordinate in the y-axis direction as a width of the bounding rectangle.

8. The method according to claim 1, wherein said obtaining the head pose of the target object based on the head image comprises:

obtaining an Euler angle of the target object based on a deep learning network; and determining the head pose when a difference between the Euler angle and a predetermined angle is smaller than a predetermined threshold.

9. The method according to claim 1, wherein said determining the direction of the line-of-sight of the target object based on the face image, the head pose, and the relative position of the pupil to the sclera comprises:

   performing feature extraction on each of the face image, the head pose, and the relative position of the pupil to the sclera based on a multi-branch deep learning network; and
   performing concatenation on a face feature of the face image, a head feature of the head pose, and the relative position of the pupil to the sclera to obtain the direction of the line-of-sight of the target object.

10. An apparatus for recognizing driver's line-of-sight, comprising:

    an image obtaining module configured to obtain image data of a target object;
    a face detection module configured to obtain a face image of the target object by processing the image data;
    a head detection module configured to obtain a head image of the target object by processing the image data;
    an eye detection module configured to obtain an eye image of the target object based on the face image;
    a head pose estimation module configured to obtain a head pose of the target object based on the head image;
    an image processing module configured to obtain a relative position of a pupil to a sclera by processing the eye image; and
    a line-of-sight estimation module configured to determine a direction of line-of-sight of the target object based on the face image, the head pose, and the relative position of the pupil to the sclera.

11. A computer-readable storage medium, having a driver's line-of-sight recognition program stored thereon,
    wherein the driver's line-of-sight recognition program implements, when being executed by a processor, the method according to any one of claims 1 to 9.

12. A vehicle, comprising:

    a memory;

a processor; and
a driver's line-of-sight recognition program stored on the memory and executable by the processor,
wherein the processor is configured to implement, when executing the driver's line-of-sight recognition program, the method according to any one of claims 1 to 9.

| | |
|---|---|
| Obtaining image data of a target object | S1 |

↓

| | |
|---|---|
| Obtaining a face image and a head image of the target object by processing the image data | S2 |

↓

| | |
|---|---|
| Obtaining an eye image of the target object based on the face image and obtaining a head pose of the target object based on the head image | S3 |

↓

| | |
|---|---|
| Obtaining a relative position of a pupil to a sclera by processing the eye image | S4 |

↓

| | |
|---|---|
| Determining a direction of line-of-sight of the target object based on the face image, the head pose, and the relative position of the pupil to the sclera | S5 |

FIG. 1

FIG. 2

FIG. 3

FIG. 4

EP 4 567 752 A1

Head Branch

Face Branch

Eye Branch

FIG. 5

100

Image obtaining module — 110

Face detection module — 120

Head detection module — 130

Eye detection module — 140

Head pose estimation module — 150

Image processing module — 160

Line-of-sight estimation module — 170

FIG. 6

200

Vehicle

Memory — 210 — Processor — 220

FIG. 7

14

## INTERNATIONAL SEARCH REPORT

| International application No. |
| --- |
| **PCT/CN2023/107264** |

**A. CLASSIFICATION OF SUBJECT MATTER**

G06V20/59(2022.01)i; G06V40/70(2022.01)i; G06V10/82(2022.01)i

According to International Patent Classification (IPC) or to both national classification and IPC

**B. FIELDS SEARCHED**

Minimum documentation searched (classification system followed by classification symbols)

G06V

Documentation searched other than minimum documentation to the extent that such documents are included in the fields searched

Electronic data base consulted during the international search (name of data base and, where practicable, search terms used)

VEN, CNTXT, USTXT, DWPI, CNKI, IEEE: 人脸, 姿态, 瞳孔, 巩膜, 虹膜, 疲劳, 驾驶, face, pose, pupils, sclera, iris, fatigue, driving

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116189153 A (ZHEJIANG JIKE INTELLIGENT TECHNOLOGY CO., LTD. et al.) 30 May 2023 (2023-05-30)<br>claims 1-12 | 1-12 |
| X | CN 114898341 A (SUZHOU MOSHI INTELLIGENT TECHNOLOGY CO., LTD.) 12 August 2022 (2022-08-12)<br>description, paragraphs [0002] and [0013]-[0030] | 1-12 |
| A | CN 112597872 A (SHENZHEN HORIZON ROBOTIC TECHNOLOGY CO., LTD.) 02 April 2021 (2021-04-02)<br>entire document | 1-12 |
| A | CN 108108684 A (HANGZHOU DIANZI UNIVERSITY et al.) 01 June 2018 (2018-06-01)<br>entire document | 1-12 |
| A | US 2012288167 A1 (MICROSOFT CORP.) 15 November 2012 (2012-11-15)<br>entire document | 1-12 |
| A | US 2018293754 A1 (INTERNATIONAL BUSINESS MACHINES CORPORATION) 11 October 2018 (2018-10-11)<br>entire document | 1-12 |

☐ Further documents are listed in the continuation of Box C.　　☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 October 2023** | **18 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/107264**

| Patent document cited in search report | | | Publication date (day/month/year) | Patent family member(s) | Publication date (day/month/year) |
|---|---|---|---|---|---|
| CN | 116189153 | A | 30 May 2023 | None | |
| CN | 114898341 | A | 12 August 2022 | None | |
| CN | 112597872 | A | 02 April 2021 | None | |
| CN | 108108684 | A | 01 June 2018 | None | |
| US | 2012288167 | A1 | 15 November 2012 | None | |
| US | 2018293754 | A1 | 11 October 2018 | None | |

Form PCT/ISA/210 (patent family annex) (July 2022)

# REFERENCES CITED IN THE DESCRIPTION

**Patent documents cited in the description**

- CN 202211089211